# EUROPEAN PATENT SPECIFICATION

(11) **EP 4 396 048 B1**
(45) Date of publication and mention of the grant of the patent: **02.04.2025**
(21) Application number: 21772993.8
(22) Date of filing: 30.08.2021
(51) Int. Cl.: B60S 1/56, B60S 1/46, B60S 1/52, B60S 1/54

(54) **SENSOR CLEANING DEVICE**
SENSORREINIGUNGSVORRICHTUNG
DISPOSITIF DE NETTOYAGE DE CAPTEUR

(43) Date of publication of application: 10.07.2024
(73) Proprietor: Kautex Textron GmbH & Co. KG, 53229 Bonn (DE)
(72) Inventor: EDWARDS, James, Rugeley Staffordshire WS15 1ER (GB); SIERRA, Nelly, 53225 Bonn (DE)
(74) Representative: Richly & Ritschel Patentanwälte PartG mbB
(86) International application number: PCT/EP2021/073896
(87) International publication number: WO 2023/030604

(56) References cited:
- US-A- 3 014 251
- US-A1- 2002 005 440
- US-A1- 2003 234 303
- US-A1- 2004 164 189
- US-A1- 2010 072 307
- US-A1- 2020 254 464
- US-A1- 2020 307 524
- US-B2- 10 882 495

## Description

The present invention relates to a sensor cleaning device for cleaning motor vehicle sensors.

Motor vehicle sensors increase the safety and the comfort of motor vehicles and can make autonomous driving possible. By way of example motor vehicle sensors can be cameras operating in the visible light spectrum or in the infrared spectrum. Moreover, motor vehicle sensors can be radar sensors, LiDAR sensors and ultrasonic sensors.

During the operation of a motor vehicle the motor vehicle sensors are exposed to environmental influences such like dirt from the road swirled by a preceding car, bird droppings, rain and so on. To safeguard the operational reliability of motor vehicle sensors it is important that the front face through which the optical or infrared or radar or ultrasonic signals of the motor vehicle sensor travel through is kept clean and that dirt on this face is reliably removed. By way of example an optical signal can be a laser signal or a laser beam.

It is known in the prior art that fluid in the form of water and in the form of air are used to clean the front face of motor vehicle sensors whereby the front face of the motor vehicle sensor is exposed to water and air ejected from a sensor cleaning device. US 2002/005440 A1 discloses a sensor cleaning device similar to the preamble of claim 1.

Since different motor vehicle sensors exhibit different sizes and different geometries different sensor cleaning devices have to be used for the different sensor cleaning devices to achieve acceptable cleaning results.

One object underlying the present invention is to provide a sensor cleaning device which can more easily be used for cleaning different motor vehicle sensors without the need to change to overall construction of the sensor cleaning device.

This object of the present invention is solved by a sensor cleaning device exhibiting the features of claim 1. The claims dependent on claim 1 describe different embodiments of the sensor cleaning device.

More precisely, the object of the present invention is solved by a sensor cleaning device for cleaning a motor vehicle sensor, wherein the sensor cleaning device exhibits a housing with at least one first housing inlet, wherein the at least one first housing inlet is used as a liquid inlet for letting liquid into the housing, at least one second housing inlet, wherein the at least one second housing inlet is used as a gas inlet for letting a gas into the housing, and with a housing outlet opening for dispensing fluid introduced into the housing via the at least one first housing inlet and/or the at least one second housing inlet. The sensor cleaning device furthermore exhibits a fluid distribution device for guiding fluid, which is introduced into the housing via the at least one first housing inlet and the at least one second housing inlet, to the housing outlet opening, wherein the fluid distribution device exhibits a number of first distribution inlets corresponding to the number of first housing inlets and a number of first distribution outlets corresponding to at least the number of first distribution inlets, and wherein the fluid distribution device exhibits a number of second distribution inlets corresponding to the number of second housing inlets and a number of second distribution outlets corresponding to at least twice the number of second distribution inlets. The fluid distribution

device is insertable into the housing, wherein each first distribution inlet is in fluid communication with one first housing inlet and each second distribution inlet is in fluid communication with one second housing inlet when the fluid distribution device is inserted into the housing.

The correspondingly designed sensor cleaning device exhibits the advantage that the sensor cleaning device can be used for different motor vehicle sensors with different sizes and different geometries simply by exchanging the fluid distribution device. By way of example the correspondingly designed sensor cleaning device can be used for a motor vehicle sensor which exhibits a comparatively small front face whereby a fluid distribution device exhibiting e.g. only three second distribution outlets is inserted into the housing. The same sensor cleaning device can be used for a motor vehicle sensor which exhibits a comparatively large front face whereby a fluid distribution device exhibiting e.g. four or five or six or even more second distribution outlets is inserted into the housing. Moreover, the assembly of the correspondingly built sensor cleaning device is extremely easy.

If the sensor cleaning device exhibits one first housing inlet and one second housing inlet the sensor cleaning device can be described in the following way: a sensor cleaning device for cleaning a motor vehicle sensor, wherein the sensor cleaning device exhibits a housing with a first housing inlet, a second housing inlet and with a housing outlet opening for dispensing fluid introduced into the housing via the first housing inlet and/or the second housing inlet. The sensor cleaning device furthermore exhibits a fluid distribution device for guiding fluid, which is introduced into the housing via the first housing inlet and the second housing inlet, to the housing outlet opening, wherein the fluid distribution device exhibits a first distribution inlet and at least one first distribution outlet and a second distribution inlet and at least two second distribution outlets, and wherein the fluid distribution device is insertable into the housing, and wherein the first distribution inlet is in fluid communication with the first housing inlet and the second distribution inlet is in fluid communication with the second housing inlet when the fluid distribution device is inserted into the housing.

If the sensor cleaning device exhibits two first housing inlets and two second housing inlets the sensor cleaning device can be described in the following way: The housing of the sensor cleaning device exhibits two first housing inlets and two second housing inlets wherein the fluid introduced into the housing via the first housing inlets and/or the second housing inlets is dispensable through the housing outlet opening, wherein the fluid distribution device exhibits two first distribution inlets and at least two first distribution outlets and two second distribution inlets and at least two second distribution outlets, wherein each first distribution inlet is in fluid communication with one first housing inlet and each second distribution inlet is in fluid communication with one second housing inlet when the fluid distribution device is inserted into the housing.

The motor vehicle sensor which is cleaned by the sensor cleaning device by way of example can be a Lidar sensor, a radar sensor, an optical sensor, a lens of an optical sensor, an ultrasonic sensor, or the like.

By way of example the first housing inlet can be used as a liquid inlet for letting a liquid (e.g. water or cleaning solution) into the housing. Therefore, the first housing inlet also can be named a liquid inlet and a liquid housing inlet, respectively.

Furthermore, by way of example the second housing inlet can be used as a gas inlet and an air inlet, respectively, for letting a gas (e.g. air or another gas) into the housing. Therefore, the second housing inlet also can be named a gas inlet, an air inlet, a gas housing inlet and an air housing inlet, respectively. Gas is also a fluid.

By way of example the first housing inlet and the second housing inlet can each be designed as an inlet nozzle.

By way of example the sensor cleaning device exhibits exactly one outlet opening.

The fluid which can be dispensed through the housing outlet opening is the fluid introduced into the housing via the first housing inlet and via the second housing inlet.

The fluid distribution device also can be named a chip.

By way of example the fluid distribution device is exchangeable inserted into the housing.

The first distribution inlet is in fluid communication with the first distribution outlet opening.

The second distribution inlet is in fluid communication with all second distribution outlets.

Since the first distribution inlet is in fluid communication with the first housing inlet and the second distribution inlet is in fluid communication with the second housing inlet when the distribution device is inserted into the housing, fluid introduced via the first housing inlet is dispensed through the housing outlet opening via the first distribution outlet, and fluid introduced via the second housing inlet is dispensed through the housing outlet opening via the at least two second distribution outlets.

By way of example the fluid distribution device exhibits two first distribution outlets.

By way of example the fluid distribution device exhibits three or more first distribution outlets.

By way of example the fluid distribution device exhibits three second distribution outlets.

By way of example the fluid distribution device exhibits four second distribution outlets.

By way of example the fluid distribution device exhibits five second distribution outlets.

By way of example the fluid distribution device exhibits six second distribution outlets.

By way of example the fluid distribution device exhibits more than six second distribution outlets.

By way of example the fluid distribution device is at least partially build from a plastic. For example, the fluid distribution device is built as a injection molded component.

In the installed state, i.e. when the sensor cleaning device is installed in a motor vehicle, by way of example the first distribution outlet and the second distribution outlets can be arranged on a same horizontal level. Moreover, In the installed state, i.e. when the sensor cleaning device is installed a motor vehicle, by way of example the first distribution outlet and the second distribution outlets can be arranged on different horizontal levels.

Preferably each first distribution outlet is fluidically connected with a first distribution inlet via a first outlet channel.

The correspondingly designed sensor cleaning device exhibits a very simple construction and therefore is very easy to be fabricated. Preferably, the first outlet channel is realized by first recess in the fluid distribution device.

More preferably, a cross section of at least one of the first outlet channels increases in a direction from the first distribution inlet to the first distribution outlet.

The correspondingly designed sensor cleaning device exhibits the advantage the liquid dispensed through the first distribution outlet also is divergent and therefore larger motor vehicle sensor and front faces of motor vehicle sensors, respectively, can be reliably cleaned by the fluid dispensed from the first distribution outlet.

Preferably, the fluid distribution device exhibits at least one distribution chamber into which a second distribution inlet ends, wherein each of the at least two second distribution outlets is fluid-connected with a distribution chamber via a second outlet channel.

The correspondingly designed sensor cleaning device exhibits the advantage that the at least two second outlet channels are equally provided with fluid. By way of example this fluid is air or another gas. Moreover, the design of the correspondingly designed fluid distribution device is simple and can therefore be easily produced.

The correspondingly designed sensor cleaning device exhibits a very simple construction and therefore is very easy to be fabricated. Preferably, the second outlet channels are realized by second recesses in the fluid distribution device.

The fluid distribution device exhibits the same number of second outlet channels as the number of second distribution outlets.

By way of example all second outlet channels can have a rectangular cross section shape. Moreover, by way of example all second outlet channels can have a circular or elliptic cross section shape. Moreover, by way of example the different second outlet channels can have cross section shapes which are different to each other.

Preferably, the sum of the cross sectional areas of all second outlet channels is in the range of 0.5 mm² to 3 mm².

Preferably, the sum of the cross sectional areas of all second outlet channels is in the range of 0.7 mm² to 2 mm². Preferably, the sum of the cross sectional areas of all second outlet channels is in the range of 0.8 mm² to 1.5 mm². Preferably, the sum of the cross sectional areas of all second outlet channels is in the range of 0.9 mm² to 1.1 mm².

It has been found out by the inventors of the present invention that surprisingly when the sum of the cross sectional areas of all second outlet channels is in the above specified ranges a very good compromise between a good directionality (a high directionality is desired) of the fluid/air dispensed through the second distribution outlets and the flow rate (a high flow rate is desired) through all second distribution outlets is achieved.

Preferably, the at least two second outlet channels each exhibit a length (L) in the range between 2 mm and 6 mm.

Preferably, the at least two second outlet channels each exhibit a length in the range between 3 mm and 5 mm. Preferably, the at least two second outlet channels each exhibit a length in the range between 3.5 mm and 4.5 mm.

It has been found out by the inventors of the present invention that surprisingly when the length of second outlet channels is in the above specified ranges a very good compromise between a good directionality (a high directionality is desired) of the fluid/air dispensed through the second distribution outlets and the flow rate (a high flow rate is desired) through all second distribution outlets is achieved.

Preferably, the cross sections of at least two second outlet channels are different to each other.

A correspondingly designed sensor cleaning device exhibits the advantage that the application of fluid discharged from the housing opening and the second distribution outlets, respectively, to the optical sensor can be designed as required.

By way of example, if the cross section(s) of the second outlet channel(s) opening out into the second outlet opening(s) facing the center of the motor vehicle sensor is (are) bigger or smaller than the cross section(s) of the second outlet channel (s) opening out into the second outlet opening(s) facing boundary areas of the motor vehicle sensor, then the center of the motor vehicle sensor is exposed with a different amount of fluid than the boundary of the motor vehicle sensor.

Preferably, the at least one first outlet channel and the second outlet channels are directed towards each other.

Since the first outlet channel and the second outlet channel are directed toward each other each longitudinal axis of each second outlet channel is directed towards the longitudinal axis of the first outlet channel.

The correspondingly designed sensor cleaning device exhibits the advantage that excellent cleaning results are achieved.

Preferably, the fluid distribution device is insertable into the housing via the housing outlet opening.

The correspondingly designed sensor cleaning device exhibits a very simple design since the housing outlet opening which anyway has to be provided is used for inserting the fluid distribution device into the housing of the sensor cleaning device.

Preferably, the fluid distribution device is insertable into the housing via a mounting opening.

By way of example the mounting opening is arranged opposite to the housing outlet opening. Moreover, it is possible that the mounting opening is arranged on a side face of the housing.

Preferably, the fluid distribution device exhibits at least one locking member for positively connecting the fluid distribution device with the housing.

The correspondingly designed sensor cleaning device exhibits the advantage that the mounting of the fluid distribution device in the housing is very easy and moreover very reliable.

Preferably, the sensor cleaning device exhibits a heating device for heating the first outlet inlet and/or the fluid distribution device.

The correspondingly designed sensor cleaning device exhibits the advantage that also in cold environments below 0°C the sensor cleaning device functions reliably.

Preferably, the fluid distribution device is at least partially build from a metal.

The correspondingly designed sensor cleaning device is very durable and moreover exhibits a high thermal conductivity. Therefore, especially when the sensor cleaning device exhibits a heating device the correspondingly designed sensor cleaning device exhibits the advantage that also in cold environments below 0°C the sensor cleaning device functions reliably.

Preferably, the sensor cleaning device exhibits more than one fluid distribution device accommodated in the housing of the sensor cleaning device.

The correspondingly designed sensor cleaning device exhibits the advantage that also very large motor vehicle sensors reliably can be cleaned by the sensor cleaning device.

Further advantages, details and features of the present invention are described in the following examples. Thereby,
- figure 1:: shows a perspective view of a sensor cleaning device according to a first embodiment of the present invention, wherein the sensor cleaning device is shown in a disassembled condition in which a fluid distribution device is not mounted in a housing of the sensor cleaning device;
- figure 2A:: shows a perspective view of a sensor cleaning device according to a second embodiment of the present invention, wherein the sensor cleaning device is shown in a disassembled condition in which a fluid distribution device is not mounted in a housing of the sensor cleaning device;
- figure 2B:: shows the sensor cleaning device shown in figure 3A viewed from a back side of the sensor cleaning device;
- figure 3A:: shows a view onto a front face of sensor cleaning device according to a third embodiment of the present invention exhibiting a plurality of fluid distribution devices;
- figure 3B:: shows a view onto a front face of sensor cleaning device according to a fourth embodiment of the present invention exhibiting a plurality of fluid distribution devices;
- figure 4A:: shows a perspective view of a sensor cleaning device according to a fifth embodiment of the present invention in an assembled condition;
- figure 4B:: shows the sensor cleaning device shown in figure 4A in a disassembled condition;
- figure 5A:: shows a perspective view of the sensor cleaning device according to the fifth embodiment of the present invention, wherein the sensor cleaning device is shown along a cross-section through the housing so that an interior region of the sensor cleaning device is visible in the region of two first outlet channels of the fluid distribution device; and
- figure 5B:: shows the sensor cleaning device of figure 5A along another cross-section through the housing so that an interior region of the sensor cleaning device is visible in the region of a plurality of second outlet channels of a fluid distribution device.

In the following description, the same reference symbols denote identical components and/or identical features. Therefore, a description or explanation of one component carried out with respect to one figure is also valid for the other figures, thus avoiding repetitive description. Furthermore, individual features described in connection with one embodiment can also be used separately in other embodiments.

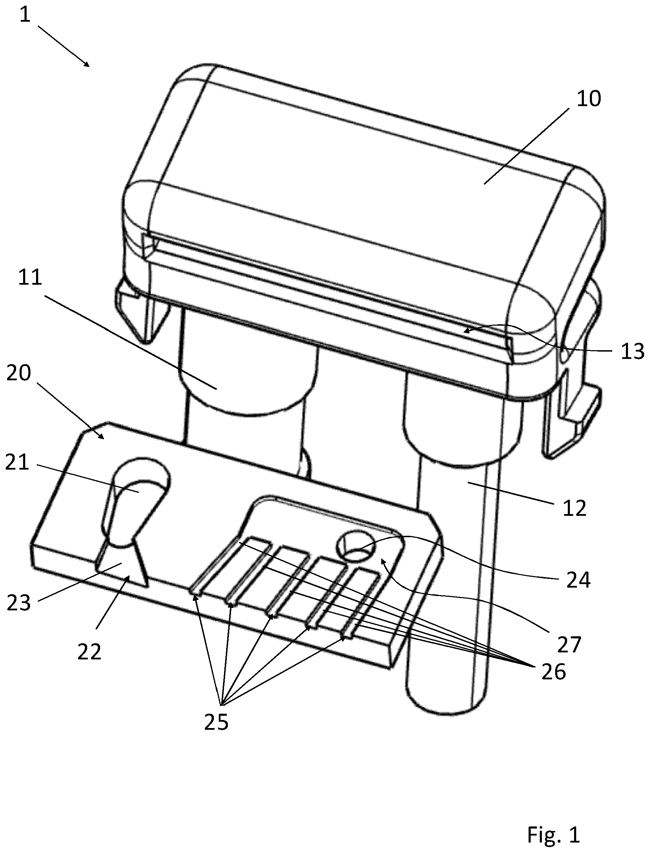

A first embodiment of a sensor cleaning device 1 according to the present invention will be described with reference to figure 1. Figure 1 shows a perspective view of the sensor cleaning device 1, wherein the sensor cleaning device 1 is shown in a disassembled condition in which a fluid distribution device 20 is not mounted in a housing 10 of the sensor cleaning device 1.

The sensor cleaning device 1 is designed for cleaning a motor vehicle sensor which is not shown in the figures. It can be seen that the sensor cleaning device 1 exhibits a housing 10 with a first housing inlet 11, a second housing inlet 12 and with a housing outlet opening 13. The first housing inlet 11 can be used as a liquid inlet 11 for letting a liquid (e.g. water or cleaning solution or a mix of water and air) into the housing 10. The second housing inlet 12 can be used as a gas inlet 12 and an air inlet 12, respectively, for letting a gas (e.g. air or another gas) into the housing 10. The first housing inlet 11 and the second housing inlet 12 are each designed as an inlet nozzle.

The housing outlet 13 is designed for dispensing fluid introduced into the housing 10 via the first housing inlet 11 and/or the second housing inlet 12. For guiding fluid, i.e. by way of example water and air, from the first housing inlet 11 and the second housing inlet 12 to the housing outlet opening 13 the sensor cleaning device 1 exhibits a fluid distribution device 20 for guiding fluid, which is introduced into the housing 10 via the first housing inlet 11 and the second housing inlet 12, to the housing outlet opening 13. The fluid distribution device 20 exhibits a first distribution inlet 21 and at least one first distribution outlet 22 and a second distribution inlet 24 and at least two second distribution outlets 25. In the shown embodiment the fluid distribution device 20 exhibits five second distribution outlets 25. In the shown embodiment the first distribution inlet 21 and the second distribution inlet 24 are both designed as through openings through the fluid distribution device 20.

The fluid distribution device 20 is insertable into the housing 10. When the fluid distribution device 20 is inserted into the housing 10 the first distribution inlet 21 is in fluid communication with the first housing inlet 11 and the second distribution inlet 24 is in fluid communication with the second housing inlet 12. The first distribution inlet 21 is in fluid communication with the first distribution outlet opening 22 and the second distribution inlet 24 is in fluid communication with all second distribution outlets 25.

Since the first distribution inlet 21 is in fluid communication with the first housing inlet 11 and the second distribution inlet 24 is in fluid communication with the second housing inlet 12, when the fluid distribution device 20 is inserted into the housing 10, fluid introduced via the first housing inlet 11 is dispensed through the housing outlet opening 13 via the first distribution outlet 22, and fluid introduced via the second housing inlet 12 is dispensed through the housing outlet opening 13 via the second distribution outlets 25.

As can be seen in figure 1 the first distribution outlet 22 is fluidically connected with the first distribution inlet 21 via a first outlet channel 23. In the shown embodiment the cross section of the first outlet channel 23 increases in a direction from the first distribution inlet 21 to the first distribution outlet (22).

The fluid distribution device 20 exhibits a distribution chamber 27 into which the second distribution inlet 24 ends. Each of the second distribution outlets 25 is fluid-connected with the distribution chamber 27 via a second outlet channel 26.

The fist outlet channel 23 and the second outlet channels 26 are realized by recesses in the fluid distribution device 20. The distribution chamber 27 also is realized by a recess 27 in the fluid distribution device 20.

The fluid distribution device 20 of the sensor cleaning device 1 according to the first embodiment of the present invention is designed such that the first outlet channel 23 and the second outlet channels 26 are directed towards each other.

As shown in figure 1 the fluid distribution device 20 is insertable into the housing 10 via the housing outlet opening 13.

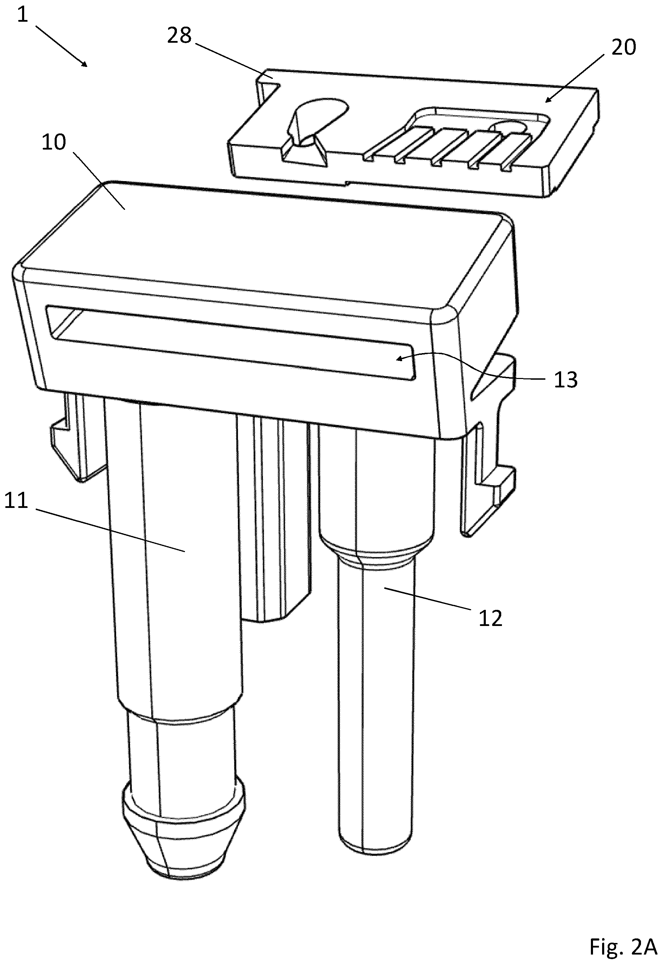

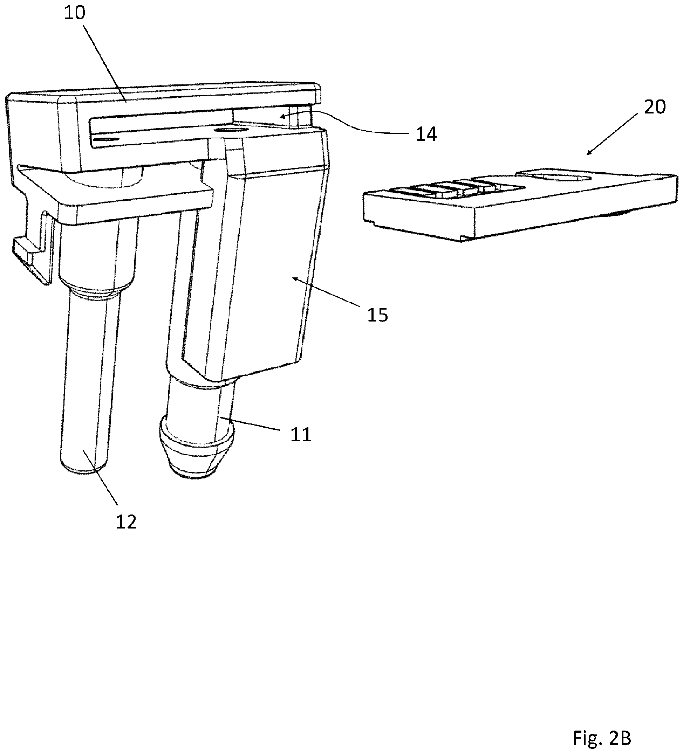

Figure 2A shows a perspective view of a sensor cleaning device 1 according to a second embodiment of the present invention. Figure 2A shows the sensor cleaning device 1 from a front side wherein the sensor cleaning device 1 is shown in a disassembled condition in which the fluid distribution device 20 is not mounted in the housing 10 of the sensor cleaning device 1. Figure 2B shows the sensor cleaning device 1 according to the second embodiment from a back side.

The sensor cleaning device 1 according to the second embodiment exhibits the same setup as the sensor cleaning device 1 according to the first embodiment of the present invention except that the fluid distribution device 20 is insertable into the housing 10 via a mounting opening 14 which is positioned opposite to the housing outlet opening 13. Moreover, in the sensor cleaning device 1 according to the second embodiment the fluid distribution device 20 exhibits a lug 28 which is arranged on an edge of the fluid distribution device 20. The lug 28 is useful when the fluid distribution device 20 is removed from the housing 10.

The sensor cleaning device 1 according to the second embodiment moreover exhibits a heating device 15 for heating the first outlet inlet 11 and/or the fluid distribution device 20. The heating device 15 can be provided in every embodiment of the present invention.

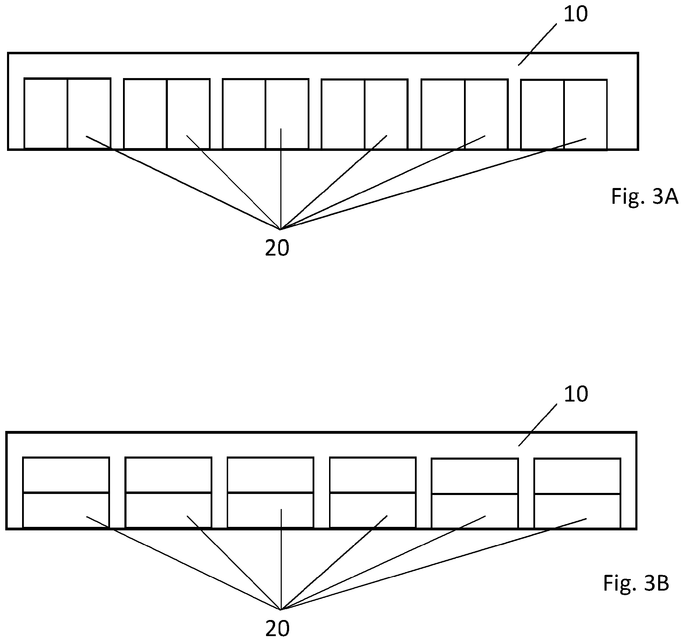

According to a third embodiment of the present invention shown in figure 3A the sensor cleaning device 1 exhibits more than one fluid distribution device 20 accommodated in the housing 10 of the sensor cleaning device 1.

In the sensor cleaning device 1 shown in figure 3A, in the installed state, i.e. when the sensor cleaning device 1 is installed a motor vehicle, the first distribution outlet 22 and the second distribution outlets 25 are arranged on a same horizontal level.

According to a fourth embodiment of the present invention shown in figure 3B the sensor cleaning device 1 exhibits more than one fluid distribution device 20 accommodated in the housing 10 of the sensor cleaning device 1. In the sensor cleaning device 1 shown in figure 3B, in the installed state, i.e. when the sensor cleaning device 1 is installed a motor vehicle, the first distribution outlet 22 and the second distribution outlets 25 are arranged on different horizontal levels.

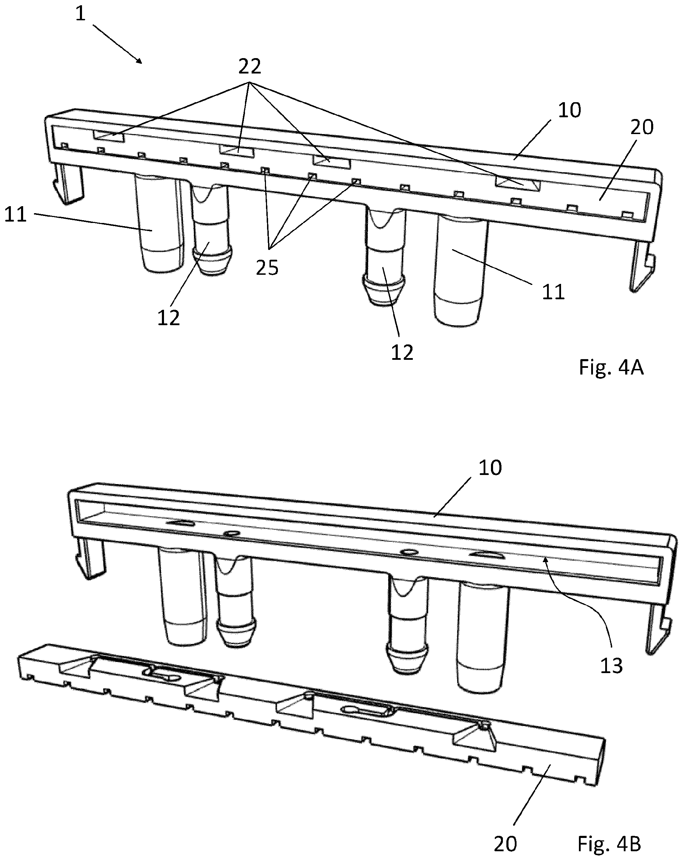

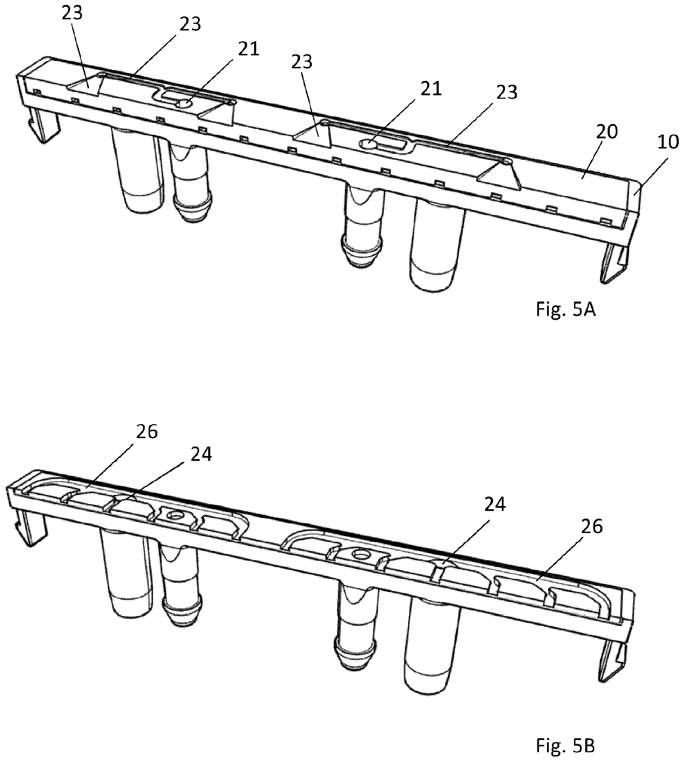

Figure 4A shows a perspective view of a sensor cleaning device 1 according to a fifth embodiment of the present invention in an assembled condition. Figure 4B shows the sensor cleaning device 1 shown in figure 5A in a disassembled condition where the fluid distribution device 20 is disassembled from the housing 10.

The sensor cleaning device 1 according to the fifth embodiment exhibits two first housing inlets 11 and two second housing inlets 12. Fluid introduced into the housing 10 via the first housing inlets 11 and/or the second housing inlets 12 is dispensable through the housing outlet opening 13.

Figure 5A shows a perspective view of the sensor cleaning device 1 according to the fifth embodiment, wherein the sensor cleaning device 1 is shown along a cross-section through the housing 10 so that an interior region of the sensor cleaning device 1 is visible in the region of two first outlet channels 23 of the fluid distribution device 20. Figure 5B shows the sensor cleaning device 1 of figure 5A along another cross-section through the housing 10 so that an interior region of the sensor cleaning device 1 is visible in the region of a plurality of second outlet channels 26 of a fluid distribution device 20.

Each first distribution outlet 22 is in fluid communication with a first distribution inlet 21 via a first outlet channel 23, and each second distribution outlet 25 is in fluid communication with a second distribution inlet 24 via a second outlet channel 26.

The fluid distribution device 20 of the sensor cleaning device 1 according to the fifth embodiment exhibits two first distribution inlets and four first distribution outlets 22. Moreover, the fluid distribution device 20 exhibits two second distribution inlets 24 and a plurality of second distribution outlets 25. Each first distribution inlet 21 is in fluid communication with one first housing inlet 11 and each second distribution inlet 24 is in fluid communication with one second housing inlet 12 when the fluid distribution device 20 is inserted into the housing 10.

### Reference signs

- 1: Sensor cleaning device
- 10: housing
- 11: first housing inlet
- 12: second housing inlet
- 13: housing outlet opening
- 14: mounting opening
- 15: heating device
- 20: fluid distribution device
- 21: first distribution inlet
- 22: first distribution outlet
- 23: first outlet channel
- 24: second distribution inlet
- 25: second distribution outlet
- 26: second outlet channel
- 27: distribution chamber
- 28: lug
- L: length of a second outlet channel

## Claims

1. Sensor cleaning device (1) for cleaning a motor vehicle sensor, wherein the sensor cleaning device (1) exhibits:
- a housing (10) with at least one first housing inlet (11), wherein the at least one first housing inlet (11) is used as a liquid inlet for letting liquid into the housing, at least one second housing inlet (12), wherein the at least one second housing inlet (12) is used as a gas inlet for letting a gas into the housing and with a housing outlet opening (13) for dispensing fluid introduced into the housing (10) via the at least one first housing inlet (11) and/or the at least one second housing inlet (12); and
- a fluid distribution device (20) for guiding fluid, which is introduced into the housing (10) via the at least one first housing inlet (11) and the at least one second housing inlet (12), to the housing outlet opening (13);
- wherein the fluid distribution device (20) exhibits a number of first distribution inlets (21) corresponding to the number of first housing inlets (11) and a number of first distribution outlets (22) corresponding to at least the number of first distribution inlets (21); and
- wherein the fluid distribution device (20) exhibits a number of second distribution inlets (24) corresponding to the number of second housing inlets (12)
- wherein the fluid distribution device (20) is insertable into the housing (10); and
- wherein each first distribution inlet (21) is in fluid communication with one first housing inlet (11) and each second distribution inlet (24) is in fluid communication with one second housing inlet (12) when the fluid distribution device (20) is inserted into the housing (10),
**characterised in that** the fluid distribution device (20) exhibits a number of second distribution outlets (25) corresponding to at least twice the number of second distribution inlets (24).

2. Sensor cleaning device (1) according to claim 1, **characterized in that** each first distribution outlet (22) is fluidically connected with a first distribution inlet (21) via a first outlet channel (23).

3. Sensor cleaning device (1) according to claim 2, **characterized in that** a cross section of at least one of the first outlet channels (23) increases in a direction from the first distribution inlet (21) to the first distribution outlet (22).

4. Sensor cleaning device (1) according to any of the preceding claims, **characterized by** the following features:
- the fluid distribution device (20) exhibits at least one distribution chamber (27) into which a second distribution inlet (24) ends; and
- each of the at least two second distribution outlets (25) is fluid-connected with a distribution chamber (27) via a second outlet channel (26).

5. Sensor cleaning device (1) according to claim 4, **characterized in that** the sum of the cross sectional areas of all second outlet channels (26) is in the range of 0.5 mm² to 3 mm².

6. Sensor cleaning device (1) according to claim 4 or claim 5, **characterized in that** the at least two second outlet channels (26) each exhibit a length (L) in the range between 2 mm and 6 mm.

7. Sensor cleaning device (1) according to any of the preceding claims 4 to 6, **characterized in that** the cross sections of at least two second outlet channels (26) are different to each other.

8. Sensor cleaning device (1) according to any of the preceding claims 3 to 7, **characterized in that** the at least one first outlet channel (23) and the second outlet channels (26) are directed towards each other.

9. Sensor cleaning device (1) according to any of the preceding claims, **characterized in that** the fluid distribution device (20) is insertable into the housing (10) via the housing outlet opening (13).

10. Sensor cleaning device (1) according to any of the preceding claims 1 to 8, **characterized in that** the fluid distribution device (20) is insertable into the housing (10) via a mounting opening (14).

11. Sensor cleaning device (1) according to any of the preceding claims, **characterized in that** the fluid distribution device (20) exhibits at least one locking member for positively connecting the fluid distribution device (20) with the housing (10).

12. Sensor cleaning device (1) according to any of the preceding claims, **characterized in that** the sensor cleaning device (1) exhibits a heating device (15) for heating the first outlet inlet (11) and/or the fluid distribution device (20).

13. Sensor cleaning device (1) according to any of the preceding claims, **characterized in that** the fluid distribution device (20) is at least partially build from a metal.

14. Sensor cleaning device (1) according to any of the preceding claims, **characterized in that** the sensor cleaning device (1) exhibits more than one fluid distribution device (20) accommodated in the housing (10) of the sensor cleaning device (1).

## Patentansprüche

1. Sensorreinigungsvorrichtung (1) zum Reinigen eines Kraftfahrzeugsensors, wobei die Sensorreinigungsvorrichtung (1) vorweist:
- ein Gehäuse (10) mit mindestens einem ersten Gehäuseeinlass (11), wobei der mindestens eine erste Gehäuseeinlass (11) als ein Flüssigkeitseinlass zum Einlassen von Flüssigkeit in das Gehäuse verwendet wird, mindestens einem zweiten Gehäuseeinlass (12), wobei der mindestens eine zweite Gehäuseeinlass (12) als ein Gaseinlass zum Einlassen eines Gases in das Gehäuse verwendet wird, und mit einer Gehäuseauslassöffnung (13) zum Abgeben von Flüssigkeit, die über den mindestens einen ersten Gehäuseeinlass (11) und/oder den mindestens einen zweiten Gehäuseeinlass (12) in das Gehäuse (10) eingeleitet wird; und
- eine Fluidverteilungsvorrichtung (20) zum Leiten von Fluid, das über den mindestens einen ersten Gehäuseeinlass (11) und den mindestens einen zweiten Gehäuseeinlass (12) in das Gehäuse (10) eingeleitet wird, zu der Gehäuseauslassöffnung (13);
- wobei die Fluidverteilungsvorrichtung (20) eine der Anzahl von ersten Verteilungseinlässen (21), die der Anzahl von ersten Gehäuseeinlässen (11) entspricht, und eine Anzahl von ersten Verteilungsauslässen (22) vorweist, die mindestens der Anzahl von ersten Verteilungseinlässen (21) entspricht; und
- wobei die Fluidverteilungsvorrichtung (20) eine Anzahl von zweiten Verteilungseinlässen (24) vorweist, die der Anzahl von zweiten Gehäuseeinlässen (12) entspricht;
- wobei die Fluidverteilungsvorrichtung (20) in das Gehäuse (10) einsetzbar ist; und
- wobei jeder erste Verteilungseinlass (21) in Fluidkommunikation mit einem ersten Gehäuseeinlass (11) steht und jeder zweite Verteilungseinlass (24) in Fluidkommunikation mit einem zweiten Gehäuseeinlass (12) steht, wenn die Fluidverteilungsvorrichtung (20) in das Gehäuse (10) eingesetzt ist,
**dadurch gekennzeichnet, dass** die Fluidverteilungsvorrichtung (20) eine Anzahl von zweiten Verteilungsauslässen (25) vorweist, die mindestens der doppelten Anzahl von zweiten Verteilungseinlässen (24) entspricht.

2. Sensorreinigungsvorrichtung (1) nach Anspruch 1,
**dadurch gekennzeichnet, dass** jeder erste Verteilungsauslass (22) mit einem ersten Verteilungseinlass (21) über einen ersten Auslasskanal (23) fluidisch verbunden ist.

3. Sensorreinigungsvorrichtung (1) nach Anspruch 2,
**dadurch gekennzeichnet, dass** ein Querschnitt mindestens eines der ersten Auslasskanäle (23) in einer Richtung von dem ersten Verteilungseinlass (21) zu dem ersten Verteilungsauslass (22) zunimmt.

4. Sensorreinigungsvorrichtung (1) nach einem der vorstehenden Ansprüche, **gekennzeichnet durch** die folgenden Funktionen:
- die Fluidverteilungsvorrichtung (20) weist mindestens eine Verteilungskammer (27) vor, in die ein zweiter Verteilungseinlass (24) mündet; und
- jeder der mindestens zwei zweiten Verteilungsauslässe (25) ist mit einer Verteilungskammer (27) über einen zweiten Auslasskanal (26) fluidisch verbunden.

5. Sensorreinigungsvorrichtung (1) nach Anspruch 4,
**dadurch gekennzeichnet, dass** die Summe der Querschnittsflächen aller zweiten Auslasskanäle (26) in dem Bereich von 0,5 mm² bis 3 mm² liegt.

6. Sensorreinigungsvorrichtung (1) nach Anspruch 4 oder 5,
**dadurch gekennzeichnet, dass** die mindestens zwei zweiten Auslasskanäle (26) jeweils eine Länge (L) in dem Bereich zwischen 2 mm und 6 mm vorweisen.

7. Sensorreinigungsvorrichtung (1) nach einem der vorstehenden Ansprüche 4 bis 6, **dadurch gekennzeichnet, dass** die Querschnitte von mindestens zwei zweiten Auslasskanälen (26) voneinander verschieden sind.

8. Sensorreinigungsvorrichtung (1) nach einem der vorstehenden Ansprüche 3 bis 7, **dadurch gekennzeichnet, dass** der mindestens eine erste Auslasskanal (23) und die zweiten Auslasskanäle (26) aufeinander zu gerichtet sind.

9. Sensorreinigungsvorrichtung (1) nach einem der vorstehenden Ansprüche, **dadurch gekennzeichnet, dass** die Fluidverteilungsvorrichtung (20) in das Gehäuse (10) über die Gehäuseauslassöffnung (13) einsetzbar ist.

10. Sensorreinigungsvorrichtung (1) nach einem der vorstehenden Ansprüche 1 bis 8, **dadurch gekennzeichnet, dass** die Fluidverteilungsvorrichtung (20) in das Gehäuse (10) über eine Montageöffnung (14) einsetzbar ist.

11. Sensorreinigungsvorrichtung (1) nach einem der vorstehenden Ansprüche, **dadurch gekennzeichnet, dass** die Fluidverteilungsvorrichtung (20) mindestens ein Verriegelungselement zum formschlüssigen Verbinden der Fluidverteilungsvorrichtung (20) mit dem Gehäuse (10) vorweist.

12. Sensorreinigungsvorrichtung (1) nach einem der vorstehenden Ansprüche, **dadurch gekennzeichnet, dass** die Sensorreinigungsvorrichtung (1) eine Heizvorrichtung (15) zum Beheizen des ersten Auslasseinlasses (11) und/oder der Fluidverteilvorrichtung (20) vorweist.

13. Sensorreinigungsvorrichtung (1) nach einem der vorstehenden Ansprüche, **dadurch gekennzeichnet, dass** die Fluidverteilungsvorrichtung (20) mindestens teilweise aus Metall gefertigt ist.

14. Sensorreinigungsvorrichtung (1) nach einem der vorstehenden Ansprüche, **dadurch gekennzeichnet, dass** die Sensorreinigungsvorrichtung (1) mehr als eine Fluidverteilungsvorrichtung (20) vorweist, die in dem Gehäuse (10) der Sensorreinigungsvorrichtung (1) untergebracht ist.

## Revendications

1. Dispositif de nettoyage de capteur (1) permettant de nettoyer un capteur de véhicule automobile, dans lequel le dispositif de nettoyage de capteur (1) présente :
- un boîtier (10) avec au moins une première entrée de boîtier (11), dans lequel l'au moins une première entrée de boîtier (11) est utilisée en guise d'entrée de liquide permettant de laisser entrer du liquide dans le boîtier, au moins une seconde entrée de boîtier (12), dans lequel l'au moins une seconde entrée de boîtier (12) est utilisée en guise d'entrée de gaz permettant de laisser entrer du gaz dans le boîtier et avec une ouverture de sortie de boîtier (13) permettant de distribuer du fluide introduit dans le boîtier (10) par le biais de l'au moins une première entrée de boîtier (11) et/ou de l'au moins une seconde entrée de boîtier (12) ; et
- un dispositif de distribution de fluide (20) permettant de guider du fluide, qui est introduit dans le boîtier (10) par le biais de l'au moins une première entrée de boîtier (11) et de l'au moins une seconde entrée de boîtier (12), jusqu'à l'ouverture de sortie de boîtier (13) ;
- dans lequel le dispositif de distribution de fluide (20) présente un nombre de premières entrées de distribution (21) correspondant au nombre de premières entrées de boîtier (11) et un nombre de premières sorties de distribution (22) correspondant au moins au nombre de premières entrées de distribution (21) ; et
- dans lequel le dispositif de distribution de fluide (20) présente un nombre de secondes entrées de distribution (24) correspondant au nombre de secondes entrées de boîtier (12) ;
- dans lequel le dispositif de distribution de fluide (20) peut être inséré dans le boîtier (10) ; et
- dans lequel chaque première entrée de distribution (21) est en communication fluidique avec une première entrée de boîtier (11) et chaque seconde entrée de distribution (24) est en communication fluidique avec une seconde entrée de boîtier (12) lorsque le dispositif de distribution de fluide (20) est inséré dans le boîtier (10), **caractérisé en ce que** le dispositif de distribution de fluide (20) présente un nombre de secondes sorties de distribution (25) correspondant à au moins deux fois le nombre de secondes entrées de distribution (24).

2. Dispositif de nettoyage de capteur (1) selon la revendication 1,
**caractérisé en ce que** chaque première sortie de distribution (22) est reliée fluidiquement à une première entrée de distribution (21) par le biais d'un premier canal de sortie (23).

3. Dispositif de nettoyage de capteur (1) selon la revendication 2,
**caractérisé en ce qu'**une section transversale d'au moins l'un des premiers canaux de sortie (23) augmente dans une direction depuis la première entrée de distribution (21) jusqu'à la première sortie de distribution (22).

4. Dispositif de nettoyage de capteur (1) selon l'une quelconque des revendications précédentes, **caractérisé par** les caractéristiques suivantes :
- le dispositif de distribution de fluide (20) présente au moins une chambre de distribution (27) dans laquelle une seconde entrée de distribution (24) se termine ; et
- chacune des au moins deux secondes sorties de distribution (25) est reliée fluidiquement à une chambre de distribution (27) par le biais d'un second canal de sortie (26).

5. Dispositif de nettoyage de capteur (1) selon la revendication 4,
**caractérisé en ce que** la somme des surfaces de section transversale de tous les seconds canaux de sortie (26) est dans la plage de 0,5 mm² à 3 mm².

6. Dispositif de nettoyage de capteur (1) selon la revendication 4 ou la revendication 5, **caractérisé en ce que** les au moins deux seconds canaux de sortie (26) présentent chacun une longueur (L) dans la plage entre 2 mm et 6 mm.

7. Dispositif de nettoyage de capteur (1) selon l'une quelconque des revendications 4 à 6 précédentes, **caractérisé en ce que** les sections transversales d'au moins deux seconds canaux de sortie (26) sont différentes l'une de l'autre.

8. Dispositif de nettoyage de capteur (1) selon l'une quelconque des revendications 3 à 7 précédentes, **caractérisé en ce que** l'au moins un premier canal de sortie (23) et les seconds canaux de sortie (26) sont orientés les uns vers les autres.

9. Dispositif de nettoyage de capteur (1) selon l'une quelconque des revendications précédentes, **caractérisé en ce que** le dispositif de distribution de fluide (20) peut être inséré dans le boîtier (10) par le biais de l'ouverture de sortie de boîtier (13).

10. Dispositif de nettoyage de capteur (1) selon l'une quelconque des revendications 1 à 8 précédentes, **caractérisé en ce que** le dispositif de distribution de fluide (20) peut être inséré dans le boîtier (10) par le biais d'une ouverture de montage (14).

11. Dispositif de nettoyage de capteur (1) selon l'une quelconque des revendications précédentes, **caractérisé en ce que** le dispositif de distribution de fluide (20) présente au moins un élément de verrouillage permettant de relier positivement le dispositif de distribution de fluide (20) au boîtier (10).

12. Dispositif de nettoyage de capteur (1) selon l'une quelconque des revendications précédentes, **caractérisé en ce que** le dispositif de nettoyage de capteur (1) présente un dispositif de chauffage (15) permettant de chauffer la première entrée de sortie (11) et/ou le dispositif de distribution de fluide (20).

13. Dispositif de nettoyage de capteur (1) selon l'une quelconque des revendications précédentes, **caractérisé en ce que** le dispositif de distribution de fluide (20) est au moins partiellement construit à partir d'un métal.

14. Dispositif de nettoyage de capteur (1) selon l'une quelconque des revendications précédentes, **caractérisé en ce que** le dispositif de nettoyage de capteur (1) présente plus d'un dispositif de distribution de fluide (20) logé dans le boîtier (10) du dispositif de nettoyage de capteur (1).
